# EUROPEAN PATENT SPECIFICATION

(11) **EP 2 551 157 B1**
(45) Date of publication and mention of the grant of the patent: **27.05.2015**
(21) Application number: 11010163.1
(22) Date of filing: 23.12.2011
(51) Int. Cl.: B60S 1/40, B60S 1/38

(54) **Connection element of windshield wiper**
Anschlusselement eines Scheibenwischers
Elément de raccordement d'essuie-glace

(30) Priority: 29.07.2011 CN 201120273111 U
(43) Date of publication of application: 30.01.2013
(73) Proprietor: Yang, Chih-Ming, Taipei City 110 (TW); Chang, Chuan-Chih, Taipei City 110 (TW)
(72) Inventor: Yang, Chih-Ming, Taipei City 110 (TW); Chang, Chuan-Chih, Taipei City 110 (TW)
(74) Representative: Urner, Peter

(56) References cited:
- WO-A2-2007/122568
- FR-A1- 2 935 654
- US-A1- 2008 066 254
- US-A1- 2010 050 361

## Description

### BACKGROUND OF THE INVENTION

### Field of the Invention

The present invention relates generally to a connection configuration of a windshield wiper, and more particularly to a connection element of the windshield wiper.

### Description of Prior Art

A windshield wiper for a vehicle is installed on a vehicle window of the vehicle. In general, a connection configuration of the windshield wiper is that a wiper blade is installed under a combining assembly and also a wiper arm is connected on the combining assembly. Hence, the wiper blade is driven by the wiper arm via the combining assembly. In addition, the wiper blade can be stably attached on the vehicle window of the vehicle and the windshield wiper is repeatedly wiped on the vehicle window by applying force on the windshield wiper, thus wiping water and dirt attached on the vehicle window by repeatedly swishing the windshield wiper.

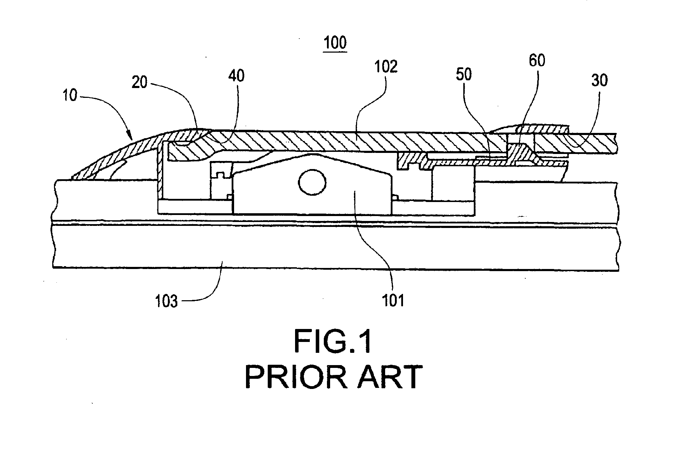

At present in the market, a variety of combining elements are designed according to wiper arms and wiper blades because of different functions and configurations of the windshield wipers. Reference is made to Fig. 1 which is a schematic cross-sectional view of a prior art combined element. A windshield wiper 100 mainly includes a fixing stage 101, a wiper arm 102, and a wiper blade 103 which is installed under the fixing stage 101. Also, the conventional combined element 10 is connected on the fixing stage according to a design of the wiper arm 102. The wiper arm 102 has a through opening 1021 and a penetrating portion 1022. The combined element 10 is a cover 20. The cover 20 has an opening 30 at one side thereof and has a groove 40 at a top portion thereof. The cover 20 has an opening-closing portion 50 corresponding to the opening 30 and the opening-closing portion 50 extends a fixture block 60 corresponding to the through opening 1021. Accordingly, the wiper arm 102 is fixed in the combined element 10 to drive the wiper blade 103 repeatedly swishing.

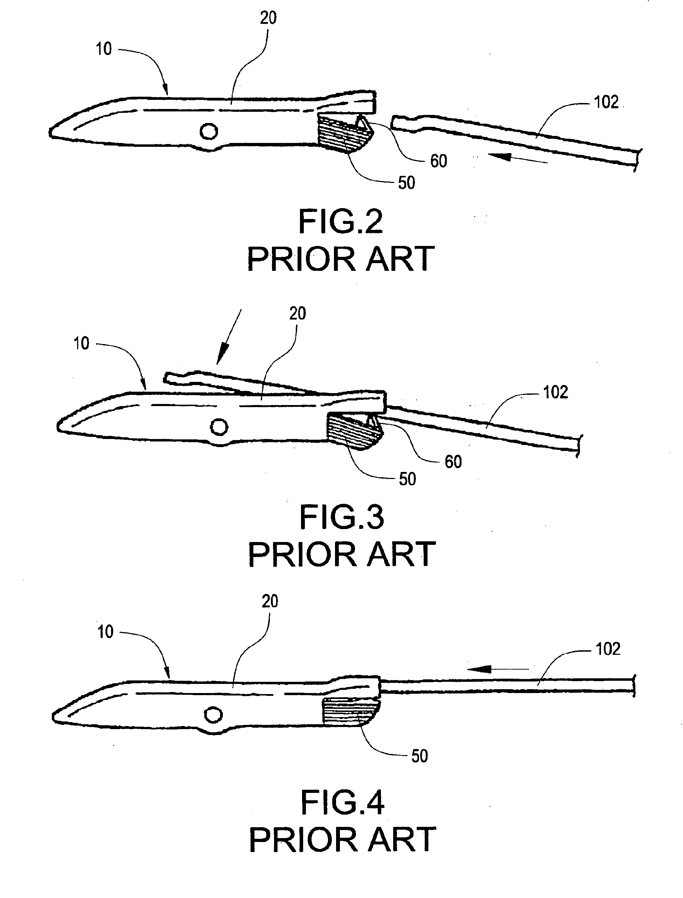

Reference is made from Fig. 2 to Fig. 4, the combination of the combined element 10 and the wiper arm 102 is implemented as described below. The wiper arm 102 penetrates into the cover 20 via the opening 30 and the groove 40 and the opening-closing portion 50 is provided to engage the wiper arm 102 so that the wiper arm 102 is fixed by the cover 20 and the fixture block 60. Because the wiper blade 103 is assembled under the combined element 10, the activity space of the wiper arm 102, which is encased in the combined element 10 from the bottom of the combined element 10, is limited by the wiper blade 103 to cause an inconvenient assembly. In addition, a force, which is produced from wiping the wiper arm 102 on the vehicle window, would be applied on the opening-closing portion 50 so that the wiper arm 102 is separated from the combined element 10.

A connection element of a windshield wiper according to the preamble of claim 1 is known from US 2010/0050361 A1 and also from FR 2935654 A1.

Accordingly, it is desirable to provide a connection element of a windshield wiper to overcome the above-mentioned disadvantages.

### SUMMARY OF THE INVENTION

An object of the present invention is to provide a connection element of a windshield wiper to conveniently and stably fix a wiper arm on a combining stage and to avoid the wiper arm from separating from the combining stage by assembling the wiper arm from the top of the combining stage.

This object is achieved by the connection element of a windshield wiper according to claim 1.

The windshield wiper includes a fixing stage and a wiper arm having a through opening and a penetrating portion. The connection element includes a combining stage. The combining stage has a fastening portion, an end wall extended along a direction opposite to the fastening portion, a block, and an engaging portion. The end wall has a groove, the fastening portion fastens the fixing stage, the penetrating portion penetrates in the end wall via the groove, and the engaging portion engages two sides of the wiper arm. Further, a through groove is defined on the side wall and corresponding to the engaging portion. A direction of opening the through groove is vertical to that of protruding the engaging portion.

Thus, it is to avoid the wiper arm be separated from the combining stage. Also, the wiper arm could be conveniently encased in the combining stage from the top of the combining stage so that the wiper arm is not easily separated from the combining stage, thus achieving the assembly stability of the connection element. In addition, the assembly direction of the wiper arm is opposite to that of the wiper blade so that larger space and convenient operation are provided to assemble the wiper arm. Furthermore, it is to avoid the penetrating portion be separated from the end wall when the wiper arm wipes on the vehicle window to increase the assembly stability of the connection element.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a schematic cross-sectional view of a prior art combined element;
Fig. 2 is a schematic assembled view of the prior art combined element;
Fig. 3 is another schematic assembled view of the prior art combined element;
Fig. 4 is further another schematic assembled view of the prior art combined element;
Fig. 5 is a schematic assembled view of a connection element according to the present invention;
Fig. 6 is a schematic perspective view of the connection element according to the present invention;
Fig. 7 is a schematic cross-sectional view of the connection element according to the present invention;
Fig. 8 is a schematic view of using status of the connection element according to the present invention;
Fig. 9 is another schematic view of using status of the connection element according to the present invention;
Fig. 10 is another schematic assembled view of the connection element according to the present invention;
Fig. 11 is further another schematic assembled view of the connection element according to the present invention;
Fig. 12 is another schematic cross-sectional view of the connection element according to the present invention; and
Fig. 13 is further another schematic cross-sectional view of the connection element according to the present invention.

### DETAILED DESCRIPTION OF THE INVENTION

Reference will now be made to the drawing figures to describe the present invention in detail. Although the present invention has been described with reference to the preferred embodiment thereof, it will be understood that the invention is not limited to the details thereof.

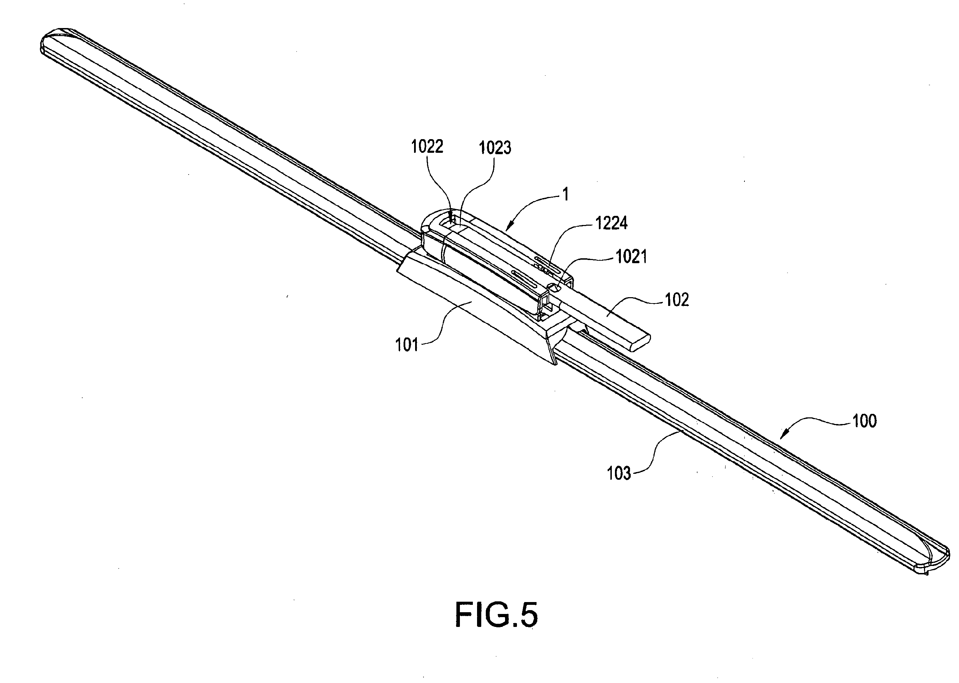

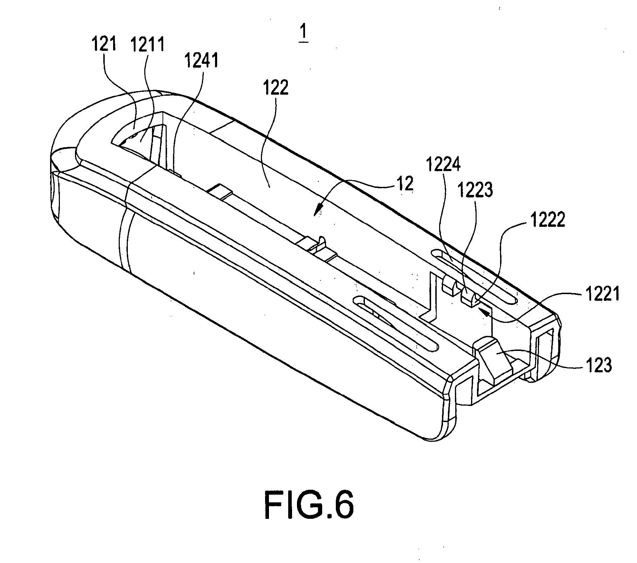

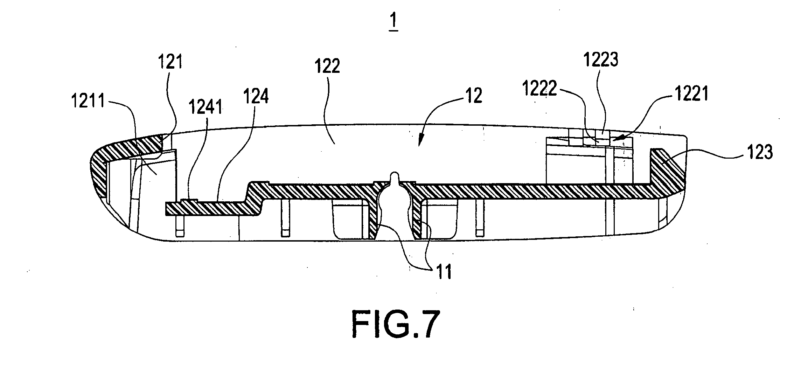

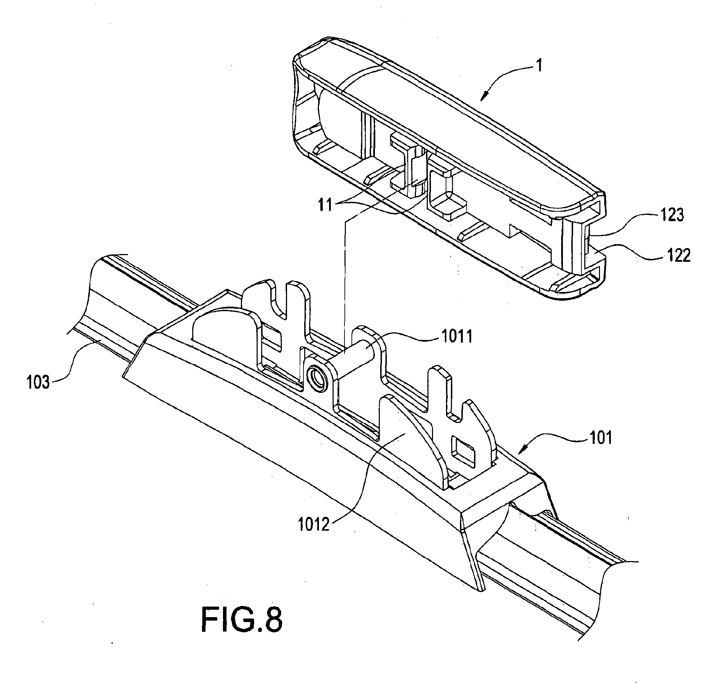

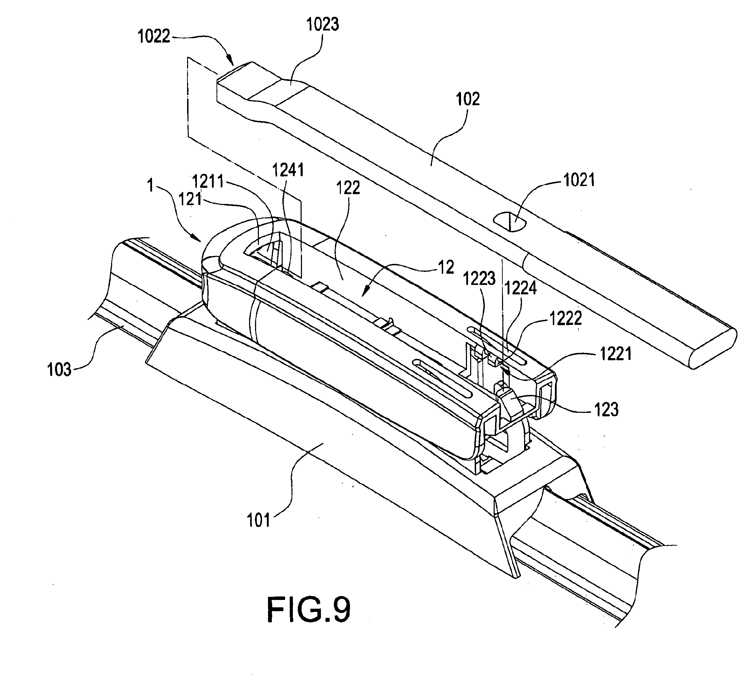

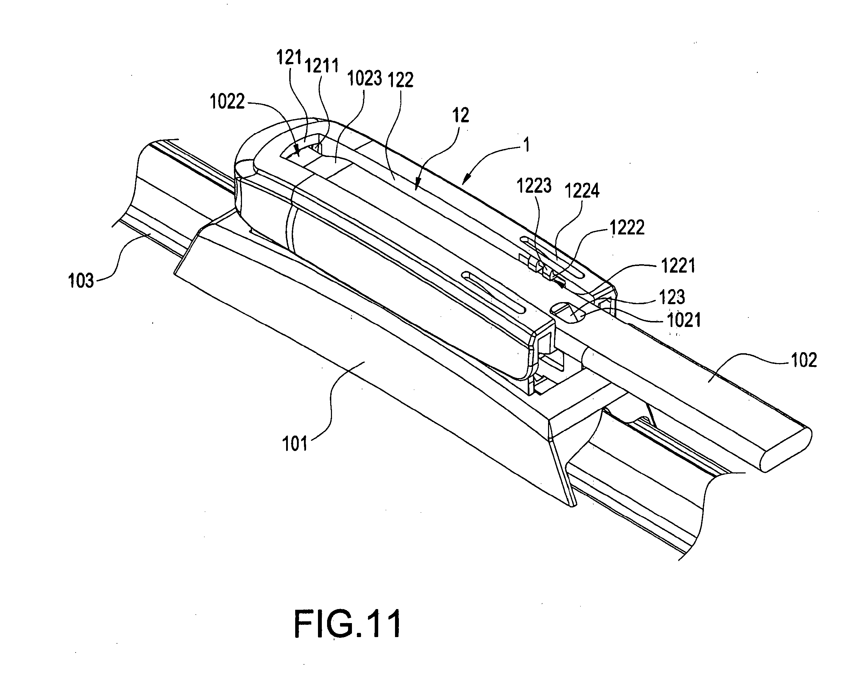

Reference is made to Fig. 5 to Fig. 11. The present invention provides a connection element of a windshield wiper. The windshield wiper 100 includes a fixing stage 101, a wiper arm 102, and a wiper blade 103 which is arrange under the fixing stage 101. The fixing stage 101 has a shaft rod 1011 and an embedded element 1012. The wiper arm 102 has a through opening 1021 and a penetrating portion 1022 at an end terminal of the wiper arm 102. The penetrating portion 1022 downwardly forms a bending section 1023. The connection element mainly has a combining stage 1.

The combining stage 1 has a fastening portion 11 and a containing chamber 12 which is arranged along a direction opposite to the fastening portion 11. The containing chamber 12 forms an end wall 121, two side walls 122 which are vertical to the end wall 121, and a block 123. The end wall 121 has a groove 1211 and each side wall 122 protrudes an engaging portion 1221. In particular, the engaging portion 1221 is at least one raised hook 1222. Each raised hook 1222 forms a slant guiding surface 1223 toward a direction away from the fastening portion 11. The side wall 122 defines a through groove 1224 corresponding to the engaging portion 1221. A direction of opening the through groove 1224 is vertical to that of protruding the engaging portion 1221. The containing chamber 12 has a subsiding portion 124 corresponding to the groove 1211 and the subsiding portion 124 protrudes an abutting block 1241.

The combination of the connection element and the windshield wiper 100 is implemented as described below. The fastening portion 11 is fastened to the corresponding shaft rod 1011 and the embedded element 1012 so that the combining stage 1 can be fixed on the fixing stage 101. In addition, one terminal of the wiper arm 102 is contained in the containing chamber 12. The penetrating portion 1022 penetrates in the end wall 121 via the groove 1211. The block 123 embeds the corresponding through opening 1021. The engaging portion 1221 engages two sides of the wiper arm 102. Accordingly, the wiper arm 102 can be fixed in the combining stage 1 through the end wall 121, the block 123, and the engaging portion 1221. Especially to deserve to be mentioned, the engaging portion 1221 has to be used no matter the wiper arm 102 is assembled or disassembled. Also, a force, which is produced from wiping the wiper arm 102 on the vehicle window, is not easily to be applied on the engaging portion 1221 because the engaging portion 1221 is arranged on the wiper arm 102 so as to avoid the wiper arm 102 being separated from the combining stage 1. In addition, each raised hook 1222 forms a slant guiding surface 1223 along a direction away from the fastening portion 11.

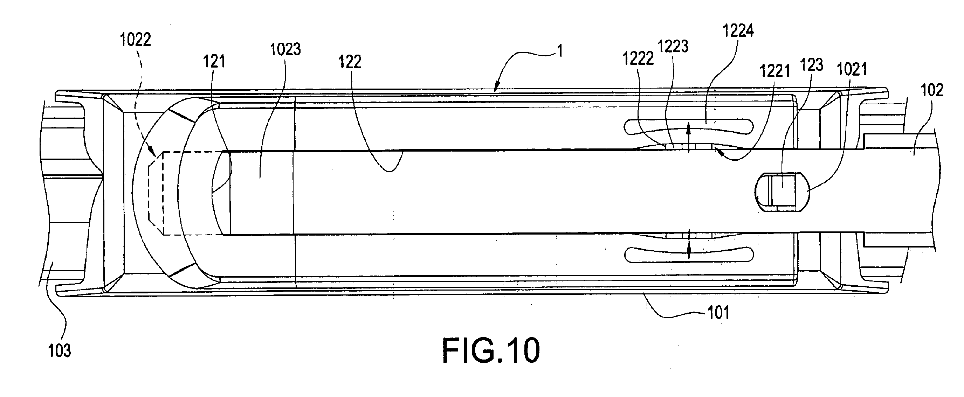

As shown in Fig. 10, a direction of opening the through groove 1224 is vertical to that of protruding the engaging portion 1221. Hence, the wiper arm 102 would gradually stress an outward-extended force on each raised hook 1222 via the slant guiding surface 1223 and simultaneously compress each through groove 1224. As a result, the engaging portion 1221 becomes elastically deformed to expand to two sides of the combining stage 1 so that the wiper arm 102 could be conveniently encased in the combining stage 1 from the top of the combining stage 1. Hence, the engaging portion 1221 is back to the original position because of the free-force raised hook 1222 so that the wiper arm 102 is not easily separated from the combining stage 1, thus achieving the assembly stability of the connection element.

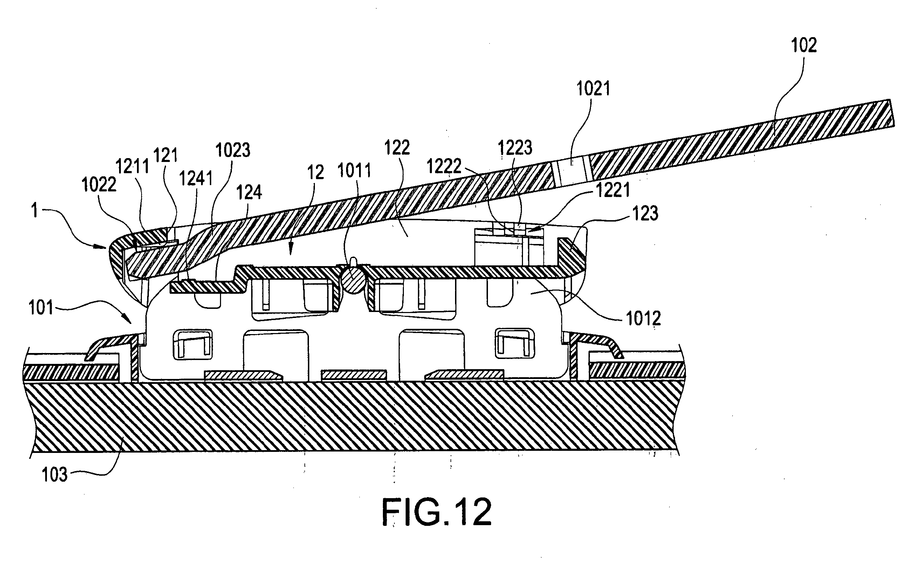

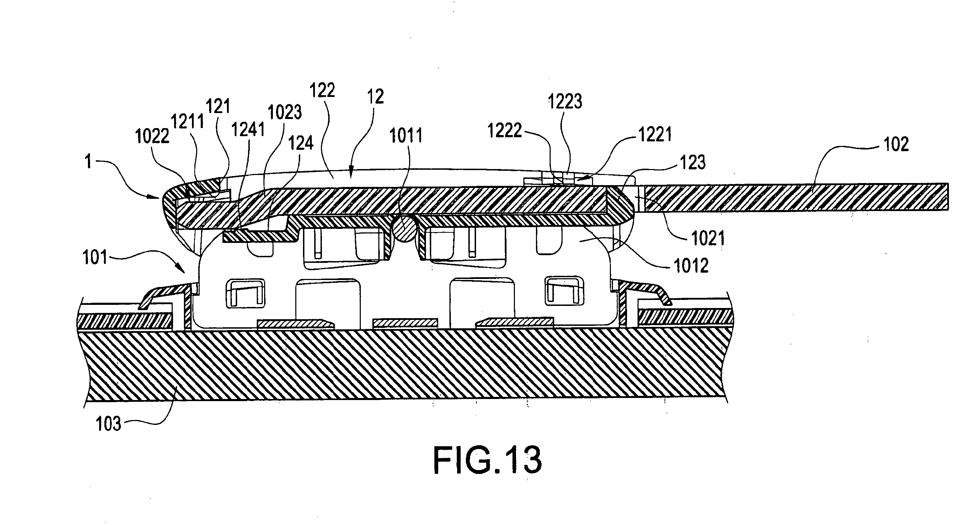

Reference is made from Fig. 12 to Fig. 13. The wiper arm 102 is assembled from the top of the combining stage 1 so that the penetrating portion 1022 penetrates and fastens on the end wall 121 and the block 123 and the engaging portion 1221 engages two sides of the wiper arm 102. In particular, the wiper blade 103 is arranged under the combining stage 1. However, if the wiper arm 102 is assembled under the combining stage 1, the activity space of the wiper arm 102 is limited by the wiper blade 103 to cause an inconvenient assembly. Accordingly, the wiper arm 102 is encased in the combining stage 1 from the top of the combining stage 1 to provide larger space and convenient operation to assemble the wiper arm 102.

Additionally, the containing chamber 12 has a subsiding portion 124 corresponding to the groove 1211. The subsiding portion 124 protrudes an abutting block 1241 to meet the bending section 1023 which is formed from the penetrating portion 1022 so that the penetrating portion 1022 is conveniently penetrated in the end wall 121 through the subsiding portion 124. Also, the abutting block 1241 is provided to stably abut the penetrating portion 1022 on the end wall 121 so as to avoid the penetrating portion 1022 be separated from the end wall 121 when the wiper arm 102 wipes on the vehicle window.

Although the present invention has been described with reference to the preferred embodiment thereof, it will be understood that the invention is not limited to the details thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A connection element of a windshield wiper, the windshield wiper (100) having a fixing stage (101) and a wiper arm (102) having a through opening (1021) and a penetrating portion (1022); the connection element comprising:
a combining stage (1) having:
a fastening portion (11);
a containing chamber (12), one end of the wiper arm (102) is contained in the containing chamber (12), the containing chamber (12) forms an end wall (121) extended along a direction opposite to the fastening portion (11) and two side walls (122) which are vertical to the end wall (121), each side wall (122) forms an engaging portion (1221); and
a block (123);
wherein the end wall (121) has a groove (1211), the fastening portion (11) fastens the fixing stage (101), the penetrating portion (1022) penetrates in the end wall (121) via the groove (1211), the block (123) embeds the corresponding through opening (1021), the engaging portion (1221) engages two sides of the wiper arm (102);
**characterized in that** a through groove (1224) is defmed on the side wall (122) and corresponding to the engaging portion (1221); a direction of opening of the through groove (1224) is vertical to that of protruding the engaging portion (1221).

2. The connection element of claim 1, wherein the engaging portion (1221) is at least one raised hook (1222).

3. The connection element of claim 2, wherein each raised hook (1222) forms a slant guiding surface (1223) along a direction away from the fastening portion (11).

4. The connection element of claim 1, wherein the containing chamber (12) has a subsiding portion (124) and the penetrating portion (1022) forms a bending section (1023); the bending section (1023) is correspondingly contained in the subsiding portion (124).

5. The connection element of claim 4, wherein the subsiding portion (124) protrudes an abutting block (1241) corresponding to the penetrating portion (1022).

## Patentansprüche

1. Verbindungselement eines Scheibenwischers, wobei der Scheibenwischer (100) ein Befestigungsgestell (101) und einen Wischerarm (102) mit einer Durchgangsöffnung (1021) und einem eindringenden Abschnitt (1022) hat; wobei das Verbindungselement Folgendes umfasst:
ein kombiniertes Gestell (1), das Folgendes aufweist:
einen Befestigungsabschnitt (11);
eine Aufnahmekammer (12), wobei ein Ende des Wischerarms (102) in der Aufnahmekammer (12) aufgenommen ist und die Aufnahmekammer (12) eine Stirnwand (121), die sich entlang einer dem Befestigungsabschnitt (11) entgegengesetzten Richtung erstreckt und zwei zu der Stirnwand (121) senkrechte Seitenwände (122) bildet, wobei jede Seitenwand (122) einen eingreifenden Abschnitt (1221) bildet; und
einen Block (123);
wobei die Stirnwand (121) eine Nut (1211) aufweist, der Befestigungsabschnitt (11) das Befestigungsgestell (101) befestigt, der eindringende Abschnitt (1022) über die Nut (1211) in die Stirnwand (121) eindringt, der Block (123) die entsprechende Durchgangsöffnung (1021) einschließt und der eingreifende Abschnitt (1221) in zwei Seiten des Wischerarms (102) eingreift;
**dadurch gekennzeichnet, dass** eine Durchgangsnut (1224) auf der Seitenwand (122) und entsprechend dem eingreifenden Abschnitt (1221) definiert ist; eine Öffnungsrichtung der Durchgangsnut (1224) senkrecht zu der Richtung, in die der eingreifenden Abschnitts (1221) hervorsteht, ist.

2. Verbindungselement nach Anspruch 1, wobei der eingreifende Abschnitt (1221) mindestens einem vorstehenden Haken (1222) entspricht.

3. Verbindungselement nach Anspruch 2, wobei jeder vorstehende Haken (1222) eine schräge Leitfläche (1223) in einer Richtung weg von dem Befestigungsabschnitt (11), bildet.

4. Verbindungselement nach Anspruch 1, wobei die Aufnahmekammer (12) einen abfallenden Abschnitt (124) aufweist und der eindringende Abschnitt (1022) ein Biegeteil (1023) bildet; und das Biegeteil (1023) entsprechend in dem abfallenden Abschnitt (124) enthalten ist.

5. Verbindungselement nach Anspruch 4, wobei von dem abfallenden Abschnitt (124) ein angrenzender Block (1241) entsprechend dem eindringenden Abschnitt (1022) vorsteht.

## Revendications

1. Élément de connexion pour un balai d'essuie-glace, le balai d'essuie-glace (100) ayant une platine de fixation (101) et un bras d'essuie-glace (102) ayant une ouverture traversante (1021) et une portion de pénétration (1022) ; l'élément de connexion comprenant:
une platine combinée (1) ayant :
une portion de fixation (11) ;
une chambre de réception (12), une extrémité du bras d'essuie-glace (102) étant contenue dans la chambre de réception (12), la chambre de réception (12) formant une paroi terminale (121) qui s'étend le long d'une direction opposée à la portion de fixation (11) et deux parois latérales (122) qui sont verticales par rapport à la paroi terminale (121), chaque paroi latérale (122) formant une portion d'engagement (1221) ;
et
un bloc (123) ;
dans lequel la paroi terminale (121) possède une gorge (1211), la portion de fixation (11) fixe la platine de fixation (101), la portion de pénétration (1022) pénètre dans la paroi terminale (121) via la gorge (1211),
le bloc (123) comporte en lui-même l'ouverture traversante correspondante (1021), et la portion d'engagement (1221) engage deux côtés du bras d'essuie-glace (102) ;
**caractérisé en ce qu'**une gorge traversante (1224) est définie sur la paroi latérale (122) et en correspondance de la portion d'engagement (1221), une direction d'ouverture de la gorge traversante (1224) étant verticale par rapport à la direction de projection de la portion d'engagement (1221).

2. Élément de connexion selon la revendication 1, dans lequel la portion d'engagement (1221) est au moins un crochet dressé (1222).

3. Élément de connexion selon la revendication 2, dans lequel chaque crochet dressé (1222) forme une surface de guidage oblique (1223) le long d'une direction en éloignement de la portion de fixation (11).

4. Élément de connexion selon la revendication 1, dans lequel la chambre de réception (12) possède une portion en dépassement (124) et la portion de pénétration (1022) forme une section cintrée (1023) ; la section cintrée (1023) étant contenue de façon correspondante dans la portion en dépassement (124).

5. Élément de connexion selon la revendication 4, dans lequel la portion en dépassement (124) se projette d'un bloc de butée (1241) correspondant à la portion de pénétration (1022).
